(19) Europäisches Patentamt / European Patent Office / Office européen des brevets

(11) **EP 4 296 298 A1**

(12) # EUROPEAN PATENT APPLICATION

(43) Date of publication:
**27.12.2023 Bulletin 2023/52**

(21) Application number: **22180312.5**

(22) Date of filing: **22.06.2022**

(51) International Patent Classification (IPC):
**C08J 5/18** (2006.01)     **A01G 13/02** (2006.01)
**B32B 27/08** (2006.01)     **B32B 27/32** (2006.01)

(52) Cooperative Patent Classification (CPC):
**C08J 5/18; A01G 13/0275; B32B 27/08;
B32B 27/327;** C08J 2323/08; C08J 2423/06

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **ABU DHABI POLYMERS CO. LTD (BOROUGE)
LLC.
Abu Dhabi (AE)**
• **Borealis AG
1020 Vienna (AT)**

(72) Inventors:
• **ANTONY, Nisha
Abu Dhabi (AE)**
• **KUMAR, Ashish
Abu Dhabi (AE)**
• **KALIAPPAN, Senthil Kumar
Abu Dhabi (AE)**

(74) Representative: **Maiwald GmbH
Elisenhof
Elisenstraße 3
80335 München (DE)**

(54) **ENHANCED GREENHOUSE FILMS WITH MORPHOLOGY DRIVEN REINFORCEMENT AND DIFFERENTIAL SCATTERING**

(57)     The present invention relates to a film suitable for the greenhouse. Said film comprises at least 70%w/w of a specific multimodal linear low density polyethylene (LLDPE) in combination with a low density polyethylene (LDPE) the desired property.

EP 4 296 298 A1

**Description**

The present invention relates to a film suitable for the greenhouse.

Plastic films are used in agriculture in order to improve plant yield. Frequently, ethylene-based polymer films are employed for this purpose, in particular for greenhouses, tunnels as well as mulching. Typical examples of known ethylene polymer films employed in this application are LDPE (low density polyethylene) films as well as EVA (ethylene-vinyl acetate) films. These materials typically are employed in the form of single layer films of varying thickness, typically from 50 to 250 μm. The requirements for such films are various and not all types of films are able to satisfy the needs with respect to all required properties. Typical requirements for agricultural films are as follows:

a) They should have high strength and toughness so that they can be put into place without the danger of breakage while, at the same time, enabling also the use under demanding weather conditions, such as strong winds, heavy rainfall, etc. In particular, they should provide long-term durability by improved mechanical properties.
b) They should provide good resistance against UV degradation as well as against pesticides.
c) They should provide high light transmission, for direct light (clear sky) as well as for diffuse light (cloudy weather), so that the required light transmission for plant growth is possible under sun light with a clear sky as well as with a cloudy sky.
d) They should provide for a rather low IR transmission in order to achieve thermal stability inside the greenhouse e.g. to balance the temperature extremes between hot days and cold nights.
e) They should provide a suitably high scattering of the light transmission, i.e., they should provide a rather diffusive effect in order to decrease direct light impact on young plants while avoiding at the same time sharp shadows excluding certain areas under the film from light transmission.
f) They should provide protection against harmful UV radiation, i.e., they should absorb at least a portion of the natural UV radiation.

In particular, greenhouse films require balanced optical and mechanical properties.

As indicated above, direct sunlight through greenhouse coverage, i.e., non-scattered light, can be harmful to young plants. At the same time, direct sunlight also produces sharp shadows preventing light from reaching all parts of the growing crop within a greenhouse. A film showing a higher haze accordingly is usually advantageous in view of the fact that such a film diffuses the incoming light, however at the same time, it is of course important that light transmission is enabled, in order to improve the growth rate of the crop within the greenhouse. Hence, the haze should not impair the overall transmission of the sunlight through the film.

Prior art film materials have inter alia a drawback that they show low degree of scattering, i.e. they have low or no diffusive effect. EVA furthermore is a relatively expensive material limiting its use in agricultural films. In order to improve the scattering effect of agricultural films, mineral fillers have been widely employed, as well as the coating of the film with a paint. This, however, disadvantageously lowers the light transmission such as of the light in the PAR and, at the same time, also reduces the mechanical strength of the films.

An optimal film for agricultural use accordingly should provide the optimal balanced advantageous properties indicated above and such a film at least should combine high transmission of both direct light and diffuse light, preferably in the photoactive range (PAR) while, at the same time, providing a sufficient mechanical strength.

The present invention provides a monolayer or multi-layer film comprising

at least 70% w/w, based on the total amount of the film, of a multimodal linear low density polyethylene (LLDPE) having a density (determined according to ISO 1183-1 - METHOD A) of 910 to 940 kg/m$^3$ and an MFRs (determined according to ISO 1133-1; 190 °C, 5 kg load) of 0.40 to 0.85 g/10 min and
a low density polyethylene (LDPE),
wherein the film has a dart drop impact (DDI; determined according to ISO 7765-1) of at least 800 g; a tear strength MD (determined according to ISO 6383-2) of at least 12 N; and a ratio of tear strength (TD)/tear strength (MD) (each determined according to ISO 6383-2) of less than 2.5.

It has been surprisingly found that films comprising at least 70%w/w of a specific multimodal linear low density polyethylene (LLDPE) in combination with a low density polyethylene (LDPE) the desired property profile for agricultural films can be achieved.

Figure 1 (Fig. 1) depicts the force vs. pull-off speed (extensibility) curves for core layer composition in Ref. 1 (LLDPE(FB2230), 85% + 15% LDPE(FB3003)); core layer composition in IE1 (LLDPE(LLDPE-A), 85% + 15% LDPE(FB3003)); and core layer composition in IE2: (LLDPE(LLDPE-A), 85% + 15% LDPE(FB3003)).

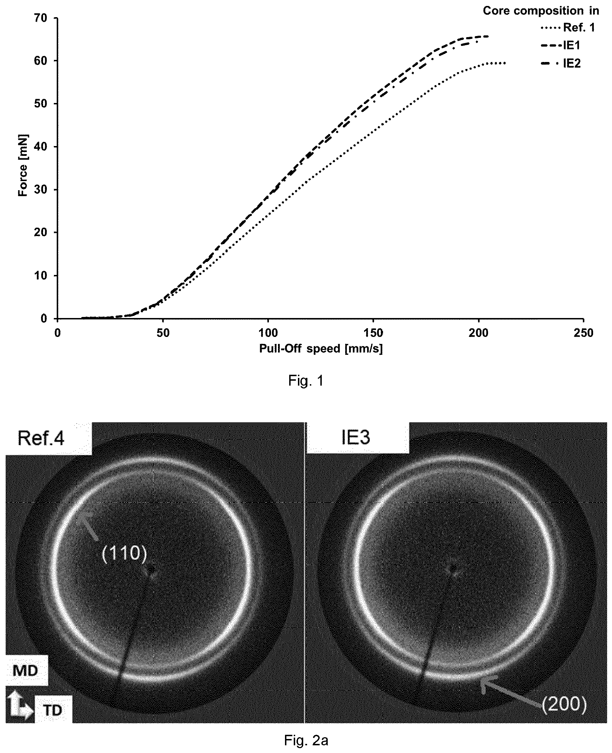

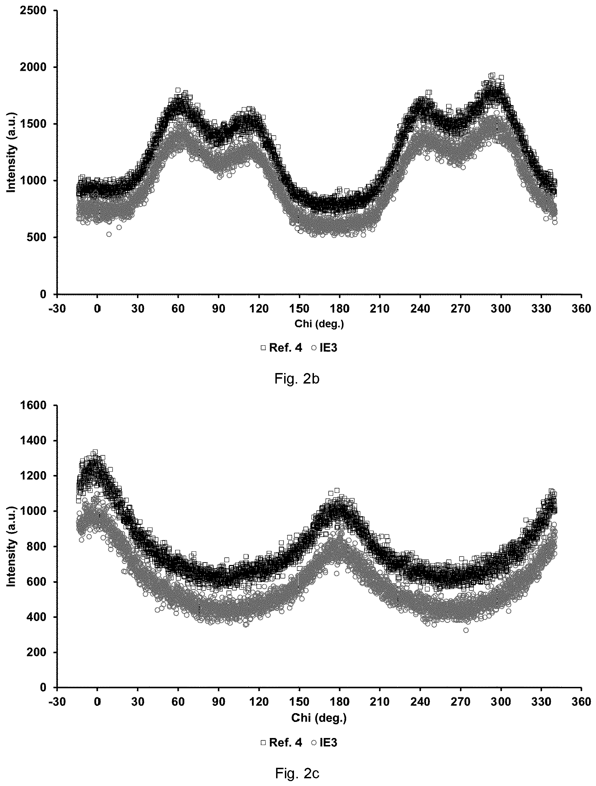

Figure 2 (Fig. 2) depicts the intensity of scattering as a function of azimuth (chi) showing the orientation of (110) and (200) reflections in the samples. Chi = 0 and 180° represent machine direction MD, and chi = 90 and 270° represent transverse direction TD (see Figure 2a - Fig. 2a). The graph depicted in Figure 2b (Fig. 2b) corresponds to (110) reflection and the graph depicted in Figure 2c (Fig. 2c) corresponds to (200) reflection. In these graphs, the higher intensity curve (black squares) corresponds to Ref. 4 and lower intensity curve (grey circles) corresponds to IE3. In particular, Fig. 2a depicts 2D WAXS patterns obtained on films with Debye ring assignment. The machine direction is north-south and the transverse direction is east-west. Fig. 2b depicts the intensity of scattering as a function of azimuth (Chi) showing the preferred orientation of (110) plane in the films, wherein Chi = 0° and 180° represent machine direction MD and Chi = 90° and 270° represent transverse direction TD. Fig. 2c depicts the intensity of scattering as a function of azimuth (chi) showing the preferred orientation of (110) and (200) reflections in the samples, wherein Chi = 0° and 180° represent machine direction MD and Chi = 90° and 270° represent transverse direction TD. Note: Intensity of scattering as a function of azimuth of Ref. 4 is shifted along y-axis for ease of visualization.

Figure 3a (Fig. 3a) depicts a comparison of skin layer morphology of (left) reference film Ref.1 and (right) inventive film for samples with 15% LDPE in core layer (IE1).

Figure 3b (Fig. 3b) depicts a comparison of core layer morphology of (left) reference film Ref.1 and (right) inventive film for samples with 15% LDPE in core layer (IE1).

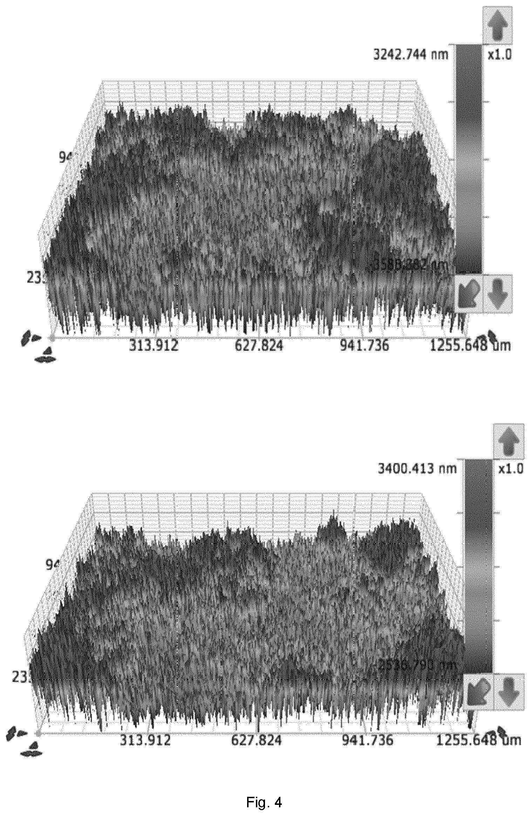

Figure 4 (Fig. 4) depicts 3D surface topography images of (top) reference film Ref. 1 with 15% LDPE in core layer and (bottom) inventive film IE1 with 15% LDPE in core layer.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

If not indicated otherwise "%" refers to weight-%.

When referred to compositions and the weight percent of the therein comprised ingredients it is to be understood that according to the present invention the overall amount of ingredients does not exceed 100% ($\pm$1% due to rounding).

**Detailed description**

The monolayer or multi-layer film according to the present invention comprises

at least 70% w/w, based on the total amount of the film, of a multimodal linear low density polyethylene (LLDPE) having a density (determined according to ISO 1183-1 - METHOD A) of 910 to 940 kg/m$^3$ and an MFRs (determined according to ISO 1133-1; 190 °C, 5 kg load) of 0.40 to 0.85 g/10 min and
a low density polyethylene (LDPE),
wherein the film has a dart drop impact (DDI; determined according to ISO 7765-1) of at least 800 g; a tear strength MD (determined according to ISO 6383-2) of at least 12 N; and a ratio of tear strength (TD)/tear strength (MD) (each determined according to ISO 6383-2) of less than 2.5.

Preferable, the film is an agricultural film, more preferably a greenhouse film.

Preferably, the multimodal linear low density polyethylene (LLDPE) has a density (determined according to ISO 1183-1 - METHOD A) of 915 to 930 kg/m$^3$, more preferably of 918 to 928 kg/m$^3$, and in particular of 920 to 926 kg/m$^3$.

Preferably, the multimodal linear low density polyethylene (LLDPE) has an MFRs (determined according to ISO 1133-1; 190 °C, 5 kg load) of 0.45 to 0.80 g/10 min, more preferably of 0.50 to 0.75 g/10 min, and in particular of 0.55 to less than 0.75 g/10 min.

Preferably, the multimodal linear low density polyethylene (LLDPE) has an MFR$_2$ (determined according to ISO 1133-1; 190 °C, 2.16 kg load) of 0.05 to 0.25 g/10 min, more preferably of 0.08 to 0.22 g/10 min, and in particular of 0.10 to 0.19 g/10 min.

Preferably, the multimodal linear low density polyethylene (LLDPE) has an MFR$_{21}$ (determined according to ISO 1133-1; 190 °C, 21.6 kg load) of 5 to 25 g/10 min, more preferably of 8 to 21 g/10 min, and in particular of 10 to 19 g/10 min.

Preferably, the multimodal linear low density polyethylene (LLDPE) has a vicat softening point A50 (10 N) (determined according to ISO 306) of 95 to 105 °C.

Preferably, the low density polyethylene (LDPE) has a density determined according to ISO 1183-1 - METHOD A) of 910 to 940 kg/m$^3$, more preferably of 915 to 930 kg/m$^3$, still more preferably of 918 to 928 kg/m$^3$, and in particular of 920 to 926 kg/m$^3$.

Preferably, the low density polyethylene (LDPE) has an MFR$_2$ (determined according to ISO 1133-1; 190 °C, 2.16 kg load) of 0.05 to 50.0 g/10 min, more preferably of 0.08 to 20.0 g/10 min, and in particular of 0.1 to 10.0 g/10 min.

Preferably, the low density polyethylene (LDPE) has an MFRs (determined according to ISO 1133-1; 190 °C, 5 kg load) of 0.3 to 50.0 g/10 min, more preferably of 0.5 to 20.0 g/10 min, and in particular of 0.8 to 10.0 g/10 min.

Preferably, the low density polyethylene (LDPE) has a melting temperature (determined according to ASTM D 3418) of 100 to 120 °C, more preferably of 103 to 116 °C, and in particular of 105 to 113 °C.

Preferably, the film has a total transmission, preferably determined according to ASTM

D1003-00, of at least 80%, more preferably at least 85%, and in particular at least 90%. It is also preferred that the film has a total transmission, preferably determined according to ASTM D1003-00, of up to 100% or up to 99% or up to 95%. In this connection, the total transmission is preferably determined with a Haze-Gard meter, BYK-Gardner, according to ASTM D1003, wherein film specimens with minimum 7 cm radius are used, and 5 specimens per sample and a reference sample are measured.

Preferably, the film has a haze (determined according to ASTM D1003-00) of at least 80%, more preferably at least 82%, and in particular at least 84%. It is also preferred that the film has a haze, preferably determined according to ASTM D1003-00, of up to 100% or up to 95% or up to 92%. In this connection, the haze is preferably determined with a Haze-Gard meter, BYK-Gardner, according to ASTM D1003, wherein film specimens with minimum 7 cm radius are used, and 5 specimens per sample and a reference sample are measured. The skilled person will be aware that it is particularly challenging to provide sufficient haze in rather thin films having a thickness of exemplarily 10 to 100 $\mu$m or 10 to less than 50 $\mu$m or 50 to 100 mm or 70 to 90 $\mu$m.

Preferably, the film has a total thickness of at least 50 $\mu$m, more preferably of at least 70 $\mu$m, still more preferably of at least 90 $\mu$m, and in particular of at least 120 $\mu$m. It is also preferred that the film has a total thickness of up to 300 $\mu$m, more preferably of up to 250 $\mu$m, still more preferably of up to 220 $\mu$m, and in particular of up to 200 $\mu$m. In this connection, it is to be understood that if referred to the "total thickness" of the film it is referred to the thickness of the monolayer or multi-layer film and not to the thickness of one of the separated layers (such as an inner layer, an outer layer, and a middle layer) present in the multi-layer film. Thus, when referring to the total thickness of the multi-layer it is referred to the sum of all layers comprised in the multi-layer.

Preferably, the film has an average surface roughness Sa determined by optical profilometry of at least 470 nm, more preferably at least 515 nm, and in particular at least 530 nm. It is also preferred that the film has an average surface roughness Sa determined by optical profilometry of up to 1000 nm, preferably of up to 900 nm, and in particular of up to 800 nm.

Preferably, the film has a root mean square surface roughness Sq determined by optical profilometry of at least 570 nm, preferably at least 615 nm, and in particular at least 630 nm. It is also preferred that the film has a root mean square surface roughness Sq determined by optical profilometry of up to 1100 nm, preferably of up to 1000 nm, and in particular of up to 900 nm.

Preferably, the film has a surface roughness peak height Sp determined by optical profilometry of at least 2800 nm, preferably at least 3000 nm, and in particular at least 3080 nm. It is also preferred that the film has a surface roughness peak height Sp determined by optical profilometry of up to 5000 nm, preferably of up to 4500 nm, and in particular of up to 4000 nm.

Preferably, the film has a surface roughtness valley depth Sv determined by optical profilometry of at least 2300 nm, preferably at least 2450 nm, and in particular at least 2550 nm. It is also preferred that the film has a surface roughtness valley depth Sv determined by optical profilometry of up to 5000 nm, preferably of up to 4000 nm, and in particular of up to 3500 nm.

Preferably, the film has a surface roughness maximum height Sz determined by optical profilometry of at least 5100 nm, preferably at least 5400 nm, and in particular at least 5600 nm. It is also preferred that the film has surface roughness maximum height Sz determined by optical profilometry of up to 8000 nm, preferably of up to 7000 nm, and in particular of up to 7500 nm.

Alternatively, the film has a lower total thickness such as less than 50 $\mu$m, preferably of 10 to less than 50 $\mu$m, and in particular of 15 to 45 $\mu$m. In this connection, the film preferably has an average surface roughness Sa determined by optical profilometry of 20 to less than 470 nm, more preferably of 50 to 450 nm, and in particular of 80 to 300 nm. Such a film preferably has a root mean square surface roughness Sq determined by optical profilometry of 20 to less than 570 nm, more preferably of 50 to 500 nm, and in particular 80 to 400 nm. Such a film preferably has a surface roughness peak height Sp determined by optical profilometry of 500 to less than 2800 nm, more preferably of 800 to 2200 nm, and in particular of 1000 to 1800 nm. Such a film preferably has a surface roughness valley depth Sv determined by optical profilometry of 400 to less than 2300 nm, more preferably of 700 to 2000 nm, and in particular of 900 to 1700 nm. Such a film preferably has a surface roughness maximum height Sz determined by optical profilometry of 1000 to less than 5100 nm, preferably of 1400 to 4500 nm, and in particular of 1800 to 4000 nm.

Preferably, the film comprises at least 80% w/w, more preferably at least 85% w/w, based on the total amount of the film, of the multimodal linear low density polyethylene (LLDPE). It is also preferred that the film comprises up to 97% w/w, more preferably up to 95% w/w, based on the total amount of the film, of the multimodal linear low density polyethylene (LLDPE).

Surprisingly, the inventors found that suitable films can be provided, wherein the film comprises a reduced amount of cost intensive low density polyethylene (LDPE). Preferably, the film comprises 1 to 30% w/w, more preferably 3 to 20% w/w, and in particular more than 5 to 15% w/w, based on the total amount of the film, of the low density polyethylene (LDPE).

Preferably, the film comprises at least two layers. In this connection it is preferred that one layer comprises the multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min in a range of 65 to 90% w/w, more preferably of 70 to 90% w/w, and in particular of 80 to 90% w/w, based on the total amount of said one layer.

Preferably, the film comprises at least three layer, more preferably an inner layer, an outer layer, and a middle layer in between the inner layer and the outer layer. In this connection it is preferred that the middle layer comprises at least 65% w/w, more preferably at least 70% w/w, and in particular at least 80% w/w, based on the total amount of the middle layer, of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min and an LDPE. It is also preferred that the middle layer comprises up to 90% w/w, based on the total amount of the middle layer, of said multimodal linear low density polyethylene.

If the film comprises an inner layer, said inner layer preferably comprises at least 80% w/w, preferably at least 90% w/w, and in particular at least 95% w/w, based on the total amount of the respective layer, of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min. It is also preferred that said inner layer comprises up to 100% w/w or up to 99% w/w of said multimodal linear low density polyethylene. In a particular preferred embodiment, the inner layer consists of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min.

If the film comprises an outer layer, said outer layer preferably comprises at least 80% w/w, preferably at least 90% w/w, and in particular at least 95% w/w, based on the total amount of the respective layer, of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min. It is also preferred that said outer layer comprises up to 100% w/w or up to 99% w/w of said multimodal linear low density polyethylene. In a particular preferred embodiment, the outer layer consists of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min.

In a preferred embodiment, the film comprises an inner layer, an outer layer, and a middle layer in between the inner layer and the outer layer, wherein the middle layer comprises at least 65% w/w, preferably at least 80% w/w, based on the total amount of the middle layer, of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min and an LDPE, and wherein the inner layer and outer layer comprise at least 80% w/w, preferably at least 90% w/w, and in particular at least 95% w/w, based on the total amount of the respective layer, of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min.

If the film comprises an inner layer, an outer layer, and a middle layer,

the inner layer preferably has a thickness of 10 to 60 μm, more preferably of 20 to 50 μm, the middle layer preferably has a thickness of 30 to 130 μm, more preferably of 50 to 100 μm, and
the outer layer preferably has a thickness of 10 to 60 μm, more preferably of 20 to 50 μm.

Preferably, the film has a dart drop impact (DDI) determined according to ISO 7765-1 of at least 850 g, preferably at least 900 g, more preferably at least 1000 g, and in particular at least 1050 g. It is also preferred that the film has a DDI determined according to ISO 7765-1 of up to 2000 g, or up to 1800 g, or up to 1700 g.

Preferably, the film has a ratio of tear strength (TD)/tear strength (MD) (each determined according to ISO 6383-2) of less than 2.3, preferably less than 2.2. It is also preferred that the film has a ratio of tear strength (TD)/tear strength (MD) (each determined according to ISO 6383-2) of more than 1.7, preferably more than 1.8.

Preferably, the comonomer(s) of the multimodal linear low density polyethylene is/are selected from $C_4$ to $C_{20}$ alpha olefins, more preferably $C_4$ to $C_8$ alpha olefins, e.g. butene, hexene, octane.

The comonomer(s) is/are preferably present in the multimodal LLDPE in a range of 1 to 20 wt%, more preferably of 3 to 15 wt%, even more preferably of 5 to 12 wt%, based on the total weight of the multimodal LLDPE.

The multimodal linear low density polyethylene (LLDPE) used in the present invention is multimodal, i.e. its molecular weight profile does not comprise a single peak but instead comprises the combination of two or more peaks centred about different average molecular weights as a result of the fact that the polymer comprises two or more separately produced components. Such multimodal polymers may be prepared for example by two or more stage polymerization or by the use of two or more different polymerization catalysts in a one stage polymerization. Preferably however they are produced by a two-or more stage polymerization process using the same catalyst, e.g. a metallocene catalyst or Ziegler-Natta catalyst, in particular a slurry polymerization in a loop reactor followed by gas phase polymerization in one or more gas phase reactor(s).

The multimodal linear low density polyethylene (LLDPE) may be made using conventional single site or Ziegler-Natta catalysis as is known in the art. Conventional cocatalysts, supports/carriers, electron donors etc. can be used.

A suitable and preferable catalyst is as follows.

The preferred polymerisation catalyst contains a magnesium compound, an aluminium compound and a titanium compound, preferably supported on a particulate support. The particulate support can be an inorganic oxide support, such as silica, alumina, titania, silica-alumina and silica-titania. Preferably, the support is silica.

In a preferred embodiment, the multimodal linear low density polyethylene (LLDPE) is produced using a Ziegler-Natta catalyst.

Preferably, the film does not comprise an additional paint-comprising layer and/or an additional tie-layer.

Preferably, the film does not comprise inorganic fillers and/or ethylene-vinyl acetate (EVA) copolymer.

The film may be prepared by methods usual in the art, e.g. casting or blow-extrusion, the latter being preferred.

Exemplarily blow-extrusion process is described in the following.

Films are produced by extrusion through an annular die with a pressure difference applied to blow the extruded cylinder into a film and achieve the desired orientation within the film, i.e. to build a stress into the cooled film.

The components of the film, e.g. the LLDPE, are typically extruded and blown, which is well known in the art.

Typically, the compositions constituting the layers of the film will be blown i.e. (co)extruded at a temperature in the range 160°C to 240°C, and cooled by blowing gas (generally air) at a temperature of 10 to 50°C to provide a frost line height of 1 to 8 times the diameter of the die, preferably 2 to 6 times the diameter of the die. The draw down ratio should generally be in the range 1.2 to 7 ((mm)/(mm))*(1/((mm)/(mm))), preferably 1.5 to 5 ((mm)/(mm))*(1/((mm)/(mm))). The take-off speed may be in the range of 8 to 18 m/min, preferable in the range of 10 to 16 m/min.

The film-forming process steps of the invention are known and may be carried out in one film line in a manner known in the art. Such film lines are commercially available.

The film, preferably the blown film of the present invention has preferably not been subjected to a subsequent stretching step.

## Examples

### Test Methods

**a) Density** was measured according to ISO 1183-1 - METHOD A. Sample preparation was done by compression moulding in accordance with ISO 1872-2:2007.

**b) Melt Flow Rate ($MFR_2$, $MFR_5$, and $MFR_{21}$)**

The melt flow rates were measured with a load of 2.16 kg ($MFR_2$), of 5 kg ($MFR_5$), or a load of 21 kg ($MFR_{21}$), respectively, at 190 °C. The melt flow rate is that quantity of polymer in grams which the test apparatus standardized to ISO 1133-1 extrudes within 10 minutes at a temperature of 190 °C under a load of 2.16 kg, 5 kg, and 21 kg, respectively.

**c) DSC analysis, melting temperature (Tm) and heat of fusion (Hf), crystallization temperature (Tc) and melt enthalpy (Hm):**

measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of 0 to +200 °C. The crystallization temperature (Tc) was determined from the cooling step, while melting temperature (Tm) and melting enthalpy (Hm) were determined from the second heating step. The crystallinity was calculated from the melting enthalpy by assuming an Hm-value of 209 J/g for a fully crystalline polypropylene (see Brandrup, J., Immergut, E. H., Eds. Polymer Handbook, 3rd ed. Wiley, New York, 1989; Chapter 3).

**d) Vicat softening point A50** (10 N) (determined according to ISO 306)

The Vicat softening temperature is the temperature at which a flat-ended 1 mm² needle penetrates the specimen to the depth of 1 mm under a 10N or 50N load. The temperature reflects the point of softening to be expected when a material was used in an elevated temperature application. Vicat softening point was measured with an Instron - CEAST HDT VICAT test instrument, according to ISO 306, Method A50, using a force of 10N and a heating rate of 50°C/h. 3 specimens per sample of 3-6.5 mm thickness and at least 10 mm in width and length were used.

### e) Tear (MD and TD)

Tear Resistance of the samples by Elmendorf method was measured with a Thwing-Albert ProTear equipment, according to ISO 6383-2. This is a method for determining the force required to continue a tear through a specified distance in a specimen from a specified slit. Data from this method are expressed as tearing force in Newtons, at a specific specimen thickness. Measurement direction can be MD or TD, measured in the same manner. For comparative purposes, data obtained from film samples of same thickness have to be used.

**f) Tensile Modulus (MD and TD)** was measured according to ISO 527-2 (cross head speed = 50 mm/min; 23 °C) using injection molded specimens as described in EN ISO 1873-2 (dog bone shape, 4 mm thickness).

### g) Dart drop impact (DDI)

DDI of the samples were measured with an INSTRON CEAST Dart Drop Impact Tester, according to ISO 7765-1. Falling dart impact is a method for evaluating the impact strength or toughness of a plastic film.

Optional additional details: This test uses a single dart configuration and a single drop height, while varying the weight of the dart. The method to analyze this test data is called the "Staircase" method. A series of impacts were conducted. If a test specimen passes, the drop weight is increased by 30 g. If a test specimen fails, the drop weight is decreased by 30 g. The results from these impacts were used to calculate the Impact Failure Weight - the point at which 50% of the test specimens will fail under the impact, and impact failure mass was calculated to nearest 1g.

### h) Puncture resistance

Puncture resistance of the films were measured with a Zwick-Roell Universal Testing Machine, with 500 N load cell, and according to ASTM D5748. This test method determines the resistance of a polyolefin film to the penetration of a probe at a standard low rate, a single test velocity. The maximum force, force at break, penetration distance, and energy to break were determined. 5 specimens per sample of 150x150 mm geometry were measured.

### i) Surface roughness (profilometry)

Surface roughness of film samples were determined using a Bruker Contour GT-K Optical Profiler. Measurements were carried out with 5x large area aperture in White Light Interferometry / Vertical Scanning Interferometry (VSI) mode, with vertical resolution of 3nm (rms). With the 5x aperture, area of 1250 $\mu$m x 950 $\mu$m of the film sample was analyzed. The most important surface roughness information obtained from line or area profile analyses are given below;

Sa: Average surface roughness, which expresses, as an absolute value, the difference in height of each point compared to the arithmetical mean of the surface.

$$S_a = \iint_a |Z(x,y)| dxdy$$

Sq: Root Mean Square Roughness, which represents the root mean square value of ordinate values within the definition area. It is equivalent to the standard deviation of heights.

$$Sq = \sqrt{\iint_a (Z(x,y))^2 dxdy}$$

Sp: Peak height, is the height of the highest peak within the defined area.
Sv: Maximum valley height), is the absolute value of the height of the largest valley (or pit) within the defined area
Sz: Maximum height, which is Sp+Sv

### j) Melt Strength

Melt strength of the samples were measured with a GOTTFERT Rheograph 25 Capillary Rheometer, using GOTTFERT Rheotens 71.97 Elongational Tester, according to ISO 16790. This method was used for determining the drawing and break characteristics of molten plastics. The method involves the measurement of the force generated in deforming a molten filament under defined extrusion temperature and drawing conditions. Test conditions were; 190°C, 0.05 mm/s piston speed, 30/1 L/D die, standard Rheotens wheels with 0.6 mm gap and with an acceleration of 120 mm/s2. 15 mm barrel was used.

### k) Haze and transmission

Haze and transmission of the samples were measured with a Haze-Gard meter, BYK-Gardner, according to ASTM D1003. Film specimen with minimum 7 cm radius were used, and 5 specimens per sample and a reference sample were measured.

### l) Wide-angle X-ray scattering (WAXS)

A strip, 2.5 cm long along machine direction and 1 cm wide along transverse direction, was cut from the blown film for WAXS measurements. Measurements were made on 3 different sample positions with the x-ray beam oriented along the normal direction to the film surface. WAXS measurements were performed in transmission geometry using a Bruker D8 Discover with GADDS x-ray diffractometer operating with the following settings:
X-ray generator: 40 kV and 40 mA; duration: 300 seconds; $\theta_1 = 0°$ & $\theta_2 = 0°$ and beam size (collimator): 500 $\mu$m.

WAXS technique in polymer studies is able to distinguish and quantify the ordered and disordered states. A monochromatic x-ray beam was collimated through the film sample and the x-rays were scattered by the crystal planes at various angles. The scattered x-rays were registered by a 2-dimensional (2D) detector. The crystalline part of semicrystalline polyethylene yields diffraction patterns of several concentric Debye rings or spots, whereas, the amorphous part of semicrystalline polymers produces diffraction patterns of a diffuse nature consisting of a halo. The strongest scattering in semicrystalline polyethylene arises from the (110) and (200) planes at $2\theta = 21.5°$ and $23.8°$, respectively.

Anisotropy in polymers can be obtained by application of mechanical stresses on solid polymer or during processing of the melt and/or during cooling. Presence of anisotropy can be estimated from scattering patterns, as the presence of arcs and spots instead of Debye rings. Shorter the arc, higher is the degree of orientation. In polyethylene films samples, the reflection from the (110) and (200) planes can be varying as a function of Chi $\chi$.

In order to obtain intensity of scattering as a function of Chi $\chi$, the 2D scattering patterns of (110) and (200) planes were integrated between $\chi = -14°$ and $340°$. These patterns are graphically shown in Fig.2.

For uniaxially oriented systems, the Hermans orientation factor ($f_H$) quantifies the orientation state as follows:

$$f_H = \frac{3\langle\cos^2\varphi\rangle - 1}{2}$$   (Alexander L.E., X-ray diffraction methods in polymer science. New York: John Wiley & Sons; 1969). Here, $\varphi$ is the angle between the unit whose orientation state is of interest (e.g. polymer chain axis and crystallographic axes) and a reference axis (e.g. machine direction MD). $f_H = 1$ indicates perfect orientation, $f_H = 0$ indicates random orientation, and $f_H = -0.5$ indicates an orthogonal orientation. All orientations are described with respect to the same reference axis (MD).

Stein extended Hermans treatment for axial orientation by setting up the following three equations to specify the degree of orientation of each of the crystal axes with respect to the reference direction Z (MD) (Stein R.S., The x-ray diffraction, birefringence and infrared dichroism of stretched polyethylene. II. Generalized uniaxial crystal orientation. Journal of Polymer Science, Vol. XXXI, 1958, pages 327-334):

$$f_{a,Z} = \frac{3\langle\cos^2\varphi_{a,Z}\rangle - 1}{2}, \quad f_{b,Z} = \frac{3\langle\cos^2\varphi_{b,Z}\rangle - 1}{2} \quad \text{and} \quad f_{c,Z} = \frac{3\langle\cos^2\varphi_{c,Z}\rangle - 1}{2}.$$

For an orthorhombic unit cell, $f_a$, $f_b$, and $f_c$ are interrelated through the Pythagorean theorem, specifically, $f_a + f_b + f_c = 0$.

The values of $\langle\cos^2\varphi_{hkl,Z}\rangle$ is defined as:

$$\langle\cos^2\varphi_{hkl,Z}\rangle = \frac{\int_0^{2\pi} I(\varphi)\sin\varphi\cos^2\varphi\, d\varphi}{\int_0^{2\pi} I(\varphi)\sin\varphi\, d\varphi}$$

The Hermans a-axis orientation factor $f_a$ is given by $f_a = \frac{3<\cos^2\varphi_{a,z}>-1}{2}$, where $<\cos^2\varphi_{a,z}> = <\cos^2\varphi_{200,Z}>$ and

Hermans b-axis orientation factor fb is given by $f_b = \frac{3<\cos^2\varphi_{b,z}>-1}{2}$, where $<\cos^2\varphi_{b,Z}> = \frac{<\cos^2\varphi_{110,Z}>-0.308<\cos^2\varphi_{200,Z}>}{0.692}$.

The Hermans c-axis orientation factor $f_c$, relative to the machine direction (reference Z-axis, MD) is calculated using the orthogonality relationship $f_a+f_b+f_c=0$.

## Materials

Borstar® FB2230 is a multimodal linear low density polyethylene (LLDPE) produced by a Ziegler-Natta catalyst having a density (determined according to ISO 1183-1 - METHOD A) of 923 kg/m$^3$, an MFR$_2$ (determined according to ISO 1133-1; 190 °C, 2.16 kg load) of 0.25 g/10 min, an MFR$_5$ (determined according to ISO 1133-1; 190 °C, 5 kg load) of 1.0 g/10 min, an MFR$_{21}$ (determined according to ISO 1133-1; 190 °C, 21.6 kg load) of 22 g/10 min, a melting temperature (determined according to ISO 11357/03) of 124 °C, and a vicat softening point A50 (10 N) (determined according to ISO 306) of 101 °C.

LLDPE-A is a multimodal linear low density polyethylene (LLDPE) produced by a Ziegler-Natta catalyst having a density (determined according to ISO 1183-1 - METHOD A) of 921 kg/m$^3$, an MFR$_2$ (determined according to ISO 1133-1; 190 °C, 2.16 kg load) of 0.17 g/10 min, an MFR$_5$ (determined according to ISO 1133-1; 190 °C, 5 kg load) of 0.70 g/10 min, an MFR$_{21}$ (determined according to ISO 1133-1; 190 °C, 21.6 kg load) of 16 g/10 min, a melting temperature (determined according to ISO 11357/03) of 123 °C, and a vicat softening point A50 (10 N) (determined according to ISO 306) of 100 °C.

Lotrène FB3003 is a low density polyethylene (LDPE) having a density (determined according to ISO 1183-1 - METHOD A) of 920 kg/m$^3$, an MFR$_5$ (determined according to ISO 1133-1; 190 °C, 5 kg load) of 1.2 g/10 min, an MFR$_2$ (determined according to ISO 1133-1; 190 °C, 2.16 kg load) of 0.3 g/10 min, and a melting temperature (determined according to ASTM D 3418) of 109 °C.

## Manufacturing of LLDPE-A

### a) Catalyst

The polymerization catalyst for polymerizing inventive example LLDPE-A was prepared according to example 1 of EP 1 378 528 A1.

### b) Polymerization of LLDPE-A

In a prepolymerization stage a first loop reactor having a volume of 50 dm$^3$ was operated at 70 °C and 64 bar pressure. For producing a prepolymerization fraction ethylene, 1-butene and hydrogen were added. In addition, the polymerization catalyst prepared according to the description above and triethylaluminium (TEA) cocatalyst were introduced into the reactor. The conditions in the reactor as shown in Table A.

The polymer slurry was withdrawn from the first loop reactor and transferred into a loop reactor having a volume of 500 dm$^3$. This second loop reactor was operated at 85°C and 64 bar pressure. Into the reactor were introduced ethylene, 1-butene and hydrogen. No additional catalyst feed was introduced into the reactor. The conditions in the reactor as shown in Table A.

The polymer slurry was withdrawn from the second loop reactor and transferred into a flash vessel operated at 3 bar pressure and 70 °C temperature where the hydrocarbons were substantially removed from the polymer. The polymer was then introduced into a gas phase reactor operated at a temperature of 78.5°C and a pressure of 19.6 bar. In addition ethylene, 1-butene and hydrogen were introduced into the reactor. The conditions are shown in Table A.

The resulting polymer was purged with nitrogen (about 50 kg/h) for one hour, stabilised with 1000 ppm of Irganox 1010 and Irgafos 168 and 1000 ppm Ca-stearate and then extruded to pellets in a counter-rotating twin screw extruder CIM90P (manufactured by Japan Steel Works) so that the throughput was 223 kg/h and the screw speed was 323 rpm.

Table A: Polymerization conditions of inventive example LLDPE-A

| | | LLDPE-A |
|---|---|---|
| **Prepolymeriser:** | | |
| Temperature | °C | 70 |
| Pressure | bar | 64 |
| Split | wt-% | 1.4 |
| H2/C3 feed ratio | kg/ton C3 | 0.2 |
| C4/C2 feed ratio | kg/ton C2 | 40 |
| **Loop:** | | |
| Temperature | °C | 85 |
| Pressure | bar | 64 |
| C2-concentration | mol% | 2.43 |
| H2/C2 molar ratio | mol/kmol | 350 |
| C4/C2 molar ratio | mol/kmol | 641 |
| C4/C2 feed ratio | kg/ton C2 | 47-48 |
| Split | wt-% | 37.6 |
| MFR$_2$ | g/10 min | 270-340 |
| Density | kg/m$^3$ | 950.5-951.5 |
| **Gas phase:** | | |
| Temperature | °C | 78.5 |
| Pressure | bar | 19.6 |
| C2-concentration | mol% | 3.6 |
| H2/C2 molar ratio | mol/kmol | 5.8-6.1 |
| C4/C2 molar ratio | mol/kmol | 765 |
| C4/C2 feed ratio | kg/ton C2 | 139-140 |
| Split | wt-% | 61.0 |
| Density (base resin) | kg/m$^3$ | 920.0-921.2 |
| MFR$_5$ (base resin) | g/10 min | 0.60-0.74 |

**Manufacturing and testing of greenhouse film**

The greenhouse films having a 3-layer multilayer structure as given in Table 1 were produced and tested. The skin layers contain pure LLDPE, whereas core layers (also referred to as middle layer) contain a blend of LLDPE and LDPE. The inventive film contains the LLDPE-A and the reference film contains the LLDPE FB2230. Processing conditions used to produce the 3-layer multilayer structured films of 150 μm thickness using the Polyrema blown film line at Borouge Innovation Centre are given in Table 2. It can be mentioned that the data from Polyrema line are in line with commercial values obtained by large-scale processors.

The films comprising 30% w/w of LDPE (Ref. 4 and IE 3) were manufactured based on the process as outlined in Table 2 and the amounts were adjusted respectively.

Further, two comparative 3-layer mono-material films i.e., 100% FB2230 (Ref. 2) or 100% LLDPE-A (Ref. 3) of similar thickness (150 μm), were produced based on the process according to Table 2, wherein 100% of the respective LLDPE was also used for the core layer.

**Table 1:** Configuration of inventive and reference greenhouse films

| Greenhouse film structure | Reference film | Inventive film |
|---|---|---|
| **Outer: LLDPE resin** | FB2230 | LLDPE-A |
| **Core: Blend of LLDPE and LDPE** | FB2230 + FB3003 | LLDPE-A+FB3003 |
| **Inner: LLDPE resin** | FB2230 | LLDPE-A |

**Table 2:** Processing conditions to produce greenhouse films in Polyrema line

| Layer | Parameters | Unit | Ref. 1 | IE1 | IE2 |
|---|---|---|---|---|---|
| OUTER LAYER | Outr Lyr Main Grade | | FB2230 | LLDPE-A | LLDPE-A |
| | Outr Lyr Main Lot No. | | 4120046 | 4120052 | 4120054 |
| | Outr Lyr Main % | % | 100 | 100 | 100 |
| | Outr Lyr Extr Melt temp. | °C | 209 | 211 | 212 |
| | Outr Lyr Extr Melt Press. | bar | 292 | 319 | 326 |
| | Outr Lyr Extr Screw speed | Rpm | 39 | 33.4 | 33.5 |
| | Outr Lyr Extr Motor Load | % | 18.4 | 18.3 | 18.4 |
| | Outr Lyr Extr Throughput | Kg/h | 37.5 | 32.8 | 32.5 |
| | Outr Lyr_Film Thick | μm | 37.5 | 37.5 | 37.5 |
| MIDDLE LAYER | Mid Lyr Main Grade | | FB2230 | LLDPE-A | LLDPE-A |
| | Mid Lyr Main Lot No. | | 4120046 | 4120052 | 4120054 |
| | Mid Lyr Main _ % | % | 85 | 85 | 85 |
| | Mid Lyr Dos. 1 Grade | | FB3003 | FB3003 | FB3003 |
| | Mid Lyr Dos. 1 _ % | % | 15 | 15 | 15 |
| | Mid Lyr Ext Melt temp. | °C | 221 | 226 | 226 |
| | Mid Lyr Ext Melt Press. | bar | 349 | 353 | 365 |
| | Mid Lyr Ext Screw speed | Rpm | 54.2 | 46.9 | 47.1 |
| | Mid Lyr Ext Motor Load | % | 21.6 | 20.9 | 21.4 |
| | Mid Lyr Ext Throughput | Kg/h | 75 | 64.2 | 65 |
| | Mid Lyr_Film Thick | μm | 75 | 75 | 75 |
| INNER LAYER | Inr Lyr Main Grade | | FB2230 | LLDPE-A | LLDPE-A |
| | Inr Lyr Main Lot No. | | 4120046 | 4120052 | 4120054 |
| | Inr Lyr Main _ % | % | 100 | 100 | 100 |
| | Inr Lyr Ext Melt temp. | °C | 213 | 213 | 214 |
| | Inr Lyr Ext Melt Press. | bar | 284 | 311 | 318 |
| | Inr Lyr Ext Screw speed | Rpm | 40 | 34.4 | 35.1 |
| | Inr Lyr Ext Motor Load | % | 17.2 | 17.6 | 17.4 |
| | Inr Lyr Ext Throughput | Kg/h | 37.5 | 32.7 | 32.6 |
| | Inr Lyr_Film Thick | μm | 37.5 | 37.5 | 37.5 |
| | Die Diameter | mm | 180 | 180 | 180 |
| | Die Gap | mm | 1.8 | 1.8 | 1.8 |
| | Total Throughput | kg/h | 150 | 129.7 | 130.1 |
| | Film Total Thickness | μm | 150 | 150 | 150 |
| | BUR | (mm)/(mm) | 2.5 | 2.49 | 2.49 |
| | Draw Down Ratio | ((mm)/(mm)) *(1/((mm)/(mm))) | 4.8 | 4.8 | 4.8 |
| | Take-Off Speed | m/min | 13 | 11.6 | 11.6 |
| | Bubble Stability | | ok | ok | ok |

Properties of the reference and inventive films are shown in Table 3. Properties for the comparative 3-layer mono-material film (i.e., Ref. 2: 100% FB2230 or Ref. 3: 100% LLDPE-A) of similar thickness (150 μm) are also given. Ratio of TD/MD tear and tensile modulus is estimated as a measure of the degree of inhomogeneity, and is shown in Table 3 for all the samples.

**Table** 3: Summary of inventive vs. reference greenhouse film properties; n.a.* denotes "not available";

| Film Properties | Ref. 2 | Ref. 3 | Ref. 1 | IE1 | Ref. 4 | IE3 |
|---|---|---|---|---|---|---|
| | 100% FB2230 film | 100% LLDPE-A film | Outer: FB2230 Core: 85% FB2230 +15%LDPE (Ref. 1) Inner: FB2230 | Outer: LLDPE-A Core: 85% LLDPE-A+15% LDPE Inner: LLDPE-A | Outer: FB2230 Core: 70% FB2230 +30% LDPE Inner: FB2230 | Outer: LLDPE-A Core: 70% LLDPE-A+30%LDPE Inner: LLDPE-A |
| Tear Strength TD (N) | 29.20 | 26.80 | 29.90 | 28.40 | 22.80 | 27.80 |
| Tear Strength MD (N) | 18.10 | 16.60 | 10.50 | 13.40 | 5.90 | 13.90 |
| Ratio TD/MD tear strength | 1.60 | 1.60 | 2.80 | 2.10 | 3.90 | 2.00 |
| Tensile modulus (1% Secant) TD (MPa) | 357 | 348 | 398 | 392 | 409 | 385 |
| Tensile modulus (1% Secant) MD (MPa) | 277 | 280 | 310 | 321 | 319 | 327 |
| Ratio TD/MD Tensile Modulus | 1.29 | 1.24 | 1.28 | 1.22 | 1.28 | 1.18 |
| Nominal stress at break (TD) (MPa) | 42.40 | 45.30 | 40.30 | 44.80 | 39.00 | 43.60 |
| Nominal stress at break (MD) (MPa) | 45.30 | 48.90 | 39.50 | 46.30 | 40.60 | 46.70 |
| Nominal strain at break (TD) (%) | 795 | 770 | 826 | 776 | 776 | 785 |
| Nominal strain at break (MD) (%) | 734 | 686 | 679 | 648 | 645 | 678 |
| Dart Drop Impact (g) | 620 | 1000 | 810 | 1120 | 690 | 1010 |
| Puncture Maximum force (N) | 131 | 132 | n.a.* | 141 | 149 | 154 |
| Puncture Energy to break (J) | 7.30 | 7.50 | n.a.* | 7.80 | 8.00 | 8.00 |
| Haze (%) | 82.40 | 84.70 | 83.10 | 84.70 | 82.60 | 85.10 |
| Total Transmission (%) | 89.70 | 89.70 | 89.70 | 89.70 | 89.70 | 89.60 |
| Surface Roughness average Sa (nm) | n. a.* | n. a.* | 465 ± 45 | 570 ± 100 | 495 ± 15 | 650 ± 110 |
| Root Mean Surface Height Sq (nm) | n. a.* | n. a.* | 560 ± 85 | 685 ± 160 | 610 ± 15 | 650 ± 50 |
| Surface Roughness peak height Sp (nm) | n. a.* | n. a.* | 2690 ± 270 | 3135 ± 405 | 2890 ± 50 | 3405 ± 435 |
| Surface Roughness valley depth Sv (nm) | n. a.* | n. a.* | 2365 ± 225 | 2775 ± 485 | 2210 ± 250 | 2665 ± 455 |

(continued)

| Film Properties | Ref. 2 | Ref. 3 | Ref. 1 | IE1 | Ref. 4 | IE3 |
|---|---|---|---|---|---|---|
| | 100% FB2230 film | 100% LLDPE-A film | Outer: FB2230 | Outer: LLDPE-A | Outer: FB2230 | Outer: LLDPE-A |
| | | | Core: 85% FB2230 +15%LDPE (Ref. 1) | Core: 85% LLDPE-A+15% LDPE | Core: 70% FB2230 +30% LDPE | Core: 70% LLDPE-A+30%LDPE |
| | | | Inner: FB2230 | Inner: LLDPE-A | Inner: FB2230 | Inner: LLDPE-A |
| Surface Roughness maximum height Sz (nm) | n. a.* | n. a.* | 5055 ± 495 | 5915 ± 885 | 5165 ± 215 | 5875 ± 695 |

**Tear:** A comparison of the mono-material film shows that MD and TD properties are not equal, due to unavoidable orientation effects of ZN LLDPE during blown film processing. Both mono-material films Ref. 2 and Ref. 3 show comparable ratio of 1.6 for TD/MD tear. However, addition of LDPE in the core layer leads to an increase of this inhomogeneity. For the reference films, drastic differences in MD and TD tear property are observed, and this difference increases with increase in LDPE content. For Ref. 1 with 15% LDPE in the core, the TD/MD tear ratio is 2.8. For Ref. 4 with 30% LDPE in the core, the TD/MD tear ratio is 3.9, indicating almost four-fold difference in MD and TD properties. In comparison, the difference is comparatively lower for the inventive films with LLDPE-A, for which the TD/MD tear ratio is 2.1 for IE1 (and 2.0 for IE3 respectively). This is far closer to the mono-material films than the reference film (TD/MD ratios of 2.8 and 3.9, respectively). Further, this ratio does not increase with increased LDPE content in core layer, as seen for the reference film. **Tensile modulus:** The ratio of TD/MD tensile modulus is 1.29 and 1.24, respectively, for the mono-material films Ref. 2 and Ref. 3. While this ratio remains similar for reference greenhouse film with 15% and 30% LDPE in the core layer, an improvement can be seen for the inventive films. Increasing the amount of LDPE in the core layer up to 30% further improves homogeneity of this property.

**Dart drop impact (DDI):** Improved DDI is seen for the inventive films, as compared to reference film. Up to 38% increase in DDI is achieved in the inventive film for the sample with 15% LDPE in the core layer.

**Puncture resistance:** Slight improvement in puncture resistance is seen for the inventive film with 30% LDPE in core layer.

**Optical properties:** Improved diffuse scattering or haze properties, without reducing total transmission. This is especially useful for greenhouse films of lower thicknesses e.g. 80 $\mu$m. **Higher surface roughness:** Slightly increased surface roughness is seen for the inventive films, which contributes to increased haze (together with internal scattering).

Altogether, improvement of the above-listed properties are even achieved at a relatively lower LDPE content of 15 wt. % in the core layer.

1. MFR, Density and Melt Strength of LLDPE and LDPE blends

Blends of 85% LLDPE (FB2230 or LLDPE-A) with 15% LDPE (FB3003) were analyzed. MFR values and density are given in Table 4, and melt strength results are given in Table 5. Blends with LLDPE-A show significantly lower MFR than blend with FB2230. Melt strength of LLDPE-Abased blends are also higher (see also Figure 1).

**Table 4:** MFR and density results of core layer composition

| Sample No. | Sample Details | MFR at 5 kg/190 °C (g/10 min) | MFR at 21.6 kg/ 190 °C (g/10 min) | FRR 21/5 | Density (kg/m$^3$) |
|---|---|---|---|---|---|
| **Core layer composition in Ref. 1** | FB2230, 85% (Batch 4120046) + FB3003 | 0.47 | 10.6 | 23 | 922.5 |
| **Core layer composition in IE1** | LLDPE-A, 85% (Batch 4120052) + FB3003 | 0.35 | 8.70 | 25 | 921.4 |
| **Core layer composition in IE2** | LLDPE-A, 85% (Batch 4120054) + FB3003 | 0.34 | 8.70 | 26 | 920.9 |

**Table 5:** Melt strength results of core layer composition

| Sample No. | Sample Details | Extensibility | Melt Strength |
| --- | --- | --- | --- |
| | | [mm/s] | [mN] |
| Core layer composition in Ref. 1 | FB2230, 85% (Batch 4120046) + FB3003 | 214 | 59.5 |
| Core layer composition in IE1 | LLDPE-A, 85% (Batch 4120052) + FB3003 | 204 | 65.7 |
| Core layer composition in IE2 | LLDPE-A, 85% (Batch 4120054) + FB3003 | 203 | 64.8 |

2. Orientation by WAXS

Analysis of orientation were done by wide angle X-ray scattering (WAXS). The inventive film shows reduced orientation in machine direction as can be seen in Figure 2. Average Herman's orientation distribution function for reference and inventive film sample with 30% LDPE is given in Table 6. In general, more homogenous orientation in three directions is seen for the inventive film, as compared to the reference film.

**Table 6.** Average Herman's orientation distribution function

| Sample | fa | fb | fc |
| --- | --- | --- | --- |
| IE3 (30% LDPE in core layer) | 0.072 | -0.146 | 0.074 |
| Ref. 4 (30% LDPE in core layer) | -0.216 | -0.015 | 0.231 |

3. Lamellar Morphology

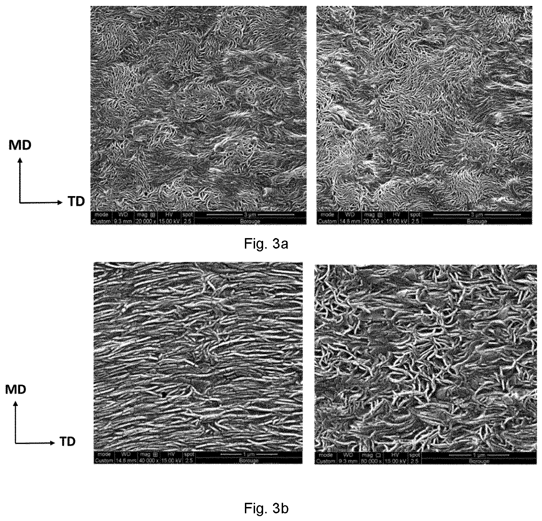

In general, the skin layers in greenhouse films containing Borstar LLDPE have a unique matt finish, offering high 3D surface roughness, and consequently provide enhanced haze or diffuse scattering property of the product. Without being bound to any theory, it is assumed that in the core layer, interaction of LDPE and LLDPE lamellae during blown film processing and resultant morphology formation has a key role in the final property of the greenhouse film product. Morphology of the skin and core layers were analyzed in detail by scanning electron microscopy, and the results can be seen in Figures 3(a) and (b). The skin layer morphology of the inventive film IE1 is dominated by larger or long-range spherulites, as compared to the reference film Ref. 1 and these spherulites are composed of highly intermeshed strand-like lamellae.

Prominent differences are seen in the lamellar morphology of core layers which are blended with LDPE. In both reference films Ref.1 and Ref. 4 (not depicted in Figure 3) as well as inventive films IE1 and IE 3 (not depicted in Figure 3), continuous lamellar network structure can be seen. In other words, discrete spherulitic structures as in non-blended LLDPE skin layers are not seen in the blended layer. In the reference film Ref. 4, highly aligned lamellae along transverse direction can be seen, which can be thought to be due to transverse stretching during bubble formation in film processing step. Interlocking features are seen between these well-aligned lamellae. In the inventive films, morphology of the film with 15% LDPE is dominated by continuous network of highly interlocked lamellae, with slight alignment along transverse direction. These observations of orientation are in line with WAXS results.

Thus, the core morphology of inventive film IE1 plays a key role in providing homogeneous mechanical properties, as well as balancing haze and total light transmission.

4. Surface Roughness:

Surface roughness analysis of the reference and inventive films were done by optical profilometry. As can be seen from Table 3 above, the inventive film shows higher average surface roughness (cf. Ref. 1 vs. IE1 and Ref. 4 vs. IE3). This can be attributed to the larger or long-range spherulites seen on the surface of the inventive film (Figure 3(a)), leading to domain coarsening effects and consequent increase in surface roughness. Increased surface roughness of the film leads to higher surface scattering and higher haze, as explained earlier.

**Claims**

1.    A monolayer or multi-layer film comprising

at least 70% w/w, based on the total amount of the film, of a multimodal linear low density polyethylene (LLDPE) having a density (determined according to ISO 1183-1 - METHOD A) of 910 to 940 kg/m$^3$ and an MFRs (determined according to ISO 1133-1; 190 °C, 5 kg load) of 0.40 to 0.85 g/10 min and
a low density polyethylene (LDPE),
wherein the film has a dart drop impact (DDI; determined according to ISO 7765-1) of at least 800 g; a tear strength MD (determined according to ISO 6383-2) of at least 12 N; and a ratio of tear strength (TD)/tear strength (MD) (each determined according to ISO 6383-2) of less than 2.5.

2. The film of claim 1, wherein the film is an agricultural film, preferably a greenhouse film.

3. The film of any of the preceding claims, wherein the total transmission determined according to ASTM D1003-00 is at least 80%, preferably at least 85%, and in particular at least 90%.

4. The film of any of the preceding claims, wherein the haze (determined according to ASTM D1003-00) is at least 80%, preferably at least 82%, and in particular at least 84%.

5. The film of any of the preceding claims, wherein the average surface roughness Sa determined by optical profilometry is at least 470 nm, preferably at least 515 nm, and in particular at least 530 nm; and/or wherein the root mean square surface roughness Sq determined by optical profilometry is at least 570 nm, preferably at least 615 nm, and in particular at least 630 nm; and/or wherein the surface roughness peak height Sp determined by optical profilometry is at least 2800 nm, preferably at least 3000 nm, and in particular at least 3080 nm; and/or wherein the surface roughtness valley depth Sv determined by optical profilometry is at least 2300 nm, preferably at least 2450 nm, and in particular at least 2550 nm; and/or wherein the surface roughness maximum height Sz determined by optical profilometry is at least 5100 nm, preferably at least 5400 nm, and in particular at least 5600 nm.

6. The film of any of the preceding claims comprising at least 80% w/w, preferably at least 85% w/w, based on the total amount of the film, of the multimodal linear low density polyethylene (LLDPE).

7. The film of any of the preceding claims comprising 1 to 30% w/w, preferably 3 to 20% w/w, more preferably more than 5 to 15% w/w, based on the total amount of the film, of the low density polyethylene (LDPE).

8. The film of any of the preceding claims, comprising at least two layers, and wherein one layer comprises the multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min in a range of 65 to 90% w/w, based on the total amount of said one layer.

9. The film of claim 8, comprising an inner layer, an outer layer, and a middle layer in between the inner layer and the outer layer, wherein the middle layer comprises at least 65% w/w, preferably at least 80% w/w, based on the total amount of the middle layer, of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min and an LDPE.

10. The film of claim 9, wherein the inner layer and outer layer comprise at least 80% w/w, preferably at least 90% w/w, and in particular at least 95% w/w, based on the total amount of the respective layer, of a multimodal linear low density polyethylene having a density (determined according to ISO 1183-1 - METHOD A) of 910 to 940 g/cm$^3$ and an MFRs (determined according to ISO 1133-1; 190 °C, 5 kg load) of 0.40-0.85 g/10 min.

11. The film according to claim 8 or 9, wherein

   the inner layer has a thickness of 10 to 60 $\mu$m, preferably of 20 to 50 $\mu$m,
   the middle layer has a thickness of 30 to 130 $\mu$m, preferably of 50 to 100 $\mu$m, and
   the outer layer has a thickness of 10 to 60 $\mu$m, preferably of 20 to 50 $\mu$m.

12. The film of any of the preceding claims, having a DDI determined according to ISO 7765-1 of at least 850 g, preferably at least 900 g, more preferably at least 1000 g, and in particular at least 1050 g.

13. The film of any of the preceding claims, having a ratio of tear strength (TD)/tear strength (MD) (each determined according to ISO 6383-2) of less than 2.3, preferably less than 2.2.

14. The film of any of the preceding claims, wherein the comonomer(s) of the multimodal linear low density polyethylene is/are selected from $C_4$ to $C_{20}$ alpha olefins.

15. The film of any of the preceding claims, wherein the film does not comprise an additional paint-comprising layer and/or an additional tie-layer.

Fig. 1

Fig. 2a

Fig. 2b

Fig. 2c

MD
TD

Fig. 3a

MD
TD

Fig. 3b

Fig. 4

Europäisches
Patentamt

European
Patent Office

Office européen
des brevets

# EUROPEAN SEARCH REPORT

**Application Number**

EP 22 18 0312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 101 060 A1 (BOREALIS AG [AT]) 7 December 2016 (2016-12-07) * Film 2; Comp. Ex. 1 * | 1-7, 12-15 | INV. C08J5/18 A01G13/02 B32B27/08 B32B27/32 |
| A | WO 2019/115783 A1 (ABU DHABI POLYMERS COMPANY LTD BOROUGE L L C [AE]; BOREALIS AG [AT]) 20 June 2019 (2019-06-20) * examples IE2, IE3; table 2 * * claims 1, 13, 14 * | 1-15 | |
| A | EP 4 000 924 A1 (BOREALIS AG [AT]; ABU DHABI POLYMERS CO LTD BOROUGE LLC [AE]) 25 May 2022 (2022-05-25) * example IE2 * | 1-15 | |

**TECHNICAL FIELDS SEARCHED (IPC)**

C08J
B32B
A01G

The present search report has been drawn up for all claims

| Place of search | Date of completion of the search | Examiner |
|---|---|---|
| Munich | 5 December 2022 | Vandoolaeghe, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 0312

05-12-2022

| Patent document cited in search report | | Publication date | Patent family member(s) | | Publication date |
|---|---|---|---|---|---|
| EP 3101060 | A1 | 07-12-2016 | CN 107922640 | A | 17-04-2018 |
| | | | EP 3101060 | A1 | 07-12-2016 |
| | | | ES 2656309 | T3 | 26-02-2018 |
| | | | WO 2016193186 | A1 | 08-12-2016 |
| WO 2019115783 | A1 | 20-06-2019 | CN 109940951 | A | 28-06-2019 |
| | | | CN 111655471 | A | 11-09-2020 |
| | | | EP 3723974 | A1 | 21-10-2020 |
| | | | WO 2019115783 | A1 | 20-06-2019 |
| EP 4000924 | A1 | 25-05-2022 | EP 4000924 | A1 | 25-05-2022 |
| | | | WO 2022106507 | A1 | 27-05-2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1378528 A1

**Non-patent literature cited in the description**

- Polymer Handbook. Wiley, 1989

- *Journal of Polymer Science,* 1958, vol. XXXI, 327-334